# EUROPÄISCHE PATENTANMELDUNG

(11) **EP 1 008 443 A1**
(43) Veröffentlichungstag der Anmeldung: **14.06.2000**
(21) Anmeldenummer: 98811206.6
(22) Anmeldetag: 08.12.1998
(51) Int. Cl.: B32B 15/08, B32B 27/36, B65D 65/40

(54) **Sterilisierbarer Folienverbund für Verpackungszwecke**

(71) Anmelder: Alusuisse Technology & Management AG, 8212 Neuhausen am Rheinfall (CH)
(72) Erfinder: Lohwasser, Wolfgang, 78262 Gailingen (DE); Frei, Olaf, 8225 Siblingen (CH)

(57) **Zusammenfassung**

Bei einem Folienverbund für Verpackungszwecke, mit guter Durchtrittssperrwirkung für Wasserdampf und Gas nach Sterilisation im Wasserbad oder im Wasserdampf bei Temperaturen von mehr als 90°C umfasst der Folienverbund eine Folie aus Polyethylenterephthalat (PET) mit einer coextrudierten Schicht aus Polyethylen-2,6-naphthalat (PEN) auf mindestens einer Seite, wobei die Folie auf mindestens einer der mit PEN beschichteten Seiten eine durch gleichzeitiges Verdampfen von Siliziumdioxid (SiO₂) und metallischem Silizium im Vakuum erzeugte 10 nm bis 200 nm dicke keramische Schicht aus SiOₓ aufweist, wobei das x eine Zahl zwischen 0.9 und 2 ist. Der Folienverbund weist eine hohe Durchtrittssperrwirkung für Wasserdampf und Gase nach Sterilisation im Wasserbad oder im Wasserdampf bei Temperaturen von mehr als 90°C auf.

## Beschreibung

Die Erfindung betrifft einen Folienverbund für Verpackungszwecke mit guter Durchtrittssperrwirkung für Wasserdampf und Gase nach Sterilisation im Wasserbad oder im Wasserdampf bei Temperaturen von mehr als 90°C, wobei der Folienbund eine durch Aufdampfen von anorganischen Materialien erzeugte Sperrschicht mit SiOₓ als wesentlichem Bestandteil aufweist. Im Rahmen der Erfindung liegt auch ein Verfahren zur Herstellung des Folienverbundes sowie dessen Verwendung.

Bei einem bekannten Verfahren zur Verlängerung der Haltbarkeit von verderblichen Produkten wie beispielsweise Lebensmittel wird eine Sterilisation im verpackten Zustand durchgeführt. Hierzu wird das Füllgut in seiner verschlossenen Verpackung in heissem Wasser oder Wasserdampf bei Temperaturen bis zu etwa 130°C im Autoklaven kurzzeitig erhitzt.

Die heute bekannten und zur Verpackung von Lebensmitteln eingesetzten transparenten Folienverbunde haben nach einer Sterilisierbehandlung oftmals eine ungenügende Wasserdampf, Sauerstoff- oder Aromabarriere. Ein Beispiel hierfür sind Polymere des Ethylvinyl-Alkohols (EVOH) und Copolymere von EVOH und Polyethylen (PE), deren Barriereeigenschaften insbesondere bei hoher Feuchte eine Verschlechterung zeigen und ein milchiges Aussehen aufweisen. Bessere Barriereeigenschaften ergeben sich durch Beschichtung einer mit Siliziummonoxid beschichteten Folie aus Polyethylenterephthalat (PET), jedoch zeigen diese Folien neben einer gelblichen Verfärbung insbesondere nach Sterilisation bei erhöhten Temperaturen eine Verminderung der Barriereeigenschaften.

Der Erfindung liegt deshalb die Aufgabe zugrunde, einen Folienverbund der eingangs genannten Art zu schaffen, der gegenüber transparenten Folienlaminaten nach dem Stand der Technik nach einer Sterilisierbehandlung verbesserte Barriereeigenschaften bezüglich Wasserdampf, Sauerstoff und Aromen aufweist.

Zur erfindungsgemässen Lösung der Aufgabe führt, dass der Folienverbund eine Folie aus Polyethylenterephthalat (PET) mit einer coextrudierten Schicht aus Polyethylen-2,6-naphthalat (PEN) auf mindestens einer Seite umfasst und die Folie auf mindestens einer der mit PEN beschichteten Seiten eine durch gleichzeitiges Verdampfen von Siliziumdioxid (SiO₂) und metallischem Silizium im Vakuum erzeugte 10 nm bis 200 nm dicke keramische Schicht aus SiOₓ aufweist, wobei x eine Zahl zwischen 0.9 und 2 ist.

Unter PEN wird im folgenden sowohl das reine Polymer als auch ein Gemisch von Polymeren verstanden, das mindestens 60 Gew.-% an Ethylen-2,6-naphthalat-Einheiten und bis zum 40 Gew.-% an Ethylen-terephthalat-Einheiten und/oder Einheiten aus cycloaliphatischen oder aromatischen Diolen und/oder Dicarbonsäuren enthält.

Bevorzugt wird eine PEN-Schicht, in der die Polymere mindestens 65 Gew.-% an Ethylen-2,6-naphthalat-Einheiten und bis zu 35 Gew.-% an Ethylenterephthalat-Einheiten enthalten. Besonders bevorzugt wird eine PEN-Schicht, in der die Polymere mindestens 70 Gew.-% an Ethylen-2,6-naphthalat-Einheiten und bis zu 30 Gew.-% an Ethylen-terephthalat-Einheiten enthalten. Wie oben erwähnt kann die PEN-Schicht jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1.5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacethylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Ein bevorzugtes Verfahren zur Herstellung der PEN/PET-Folie umfasst die folgenden Schritte:
a) Herstellen der Folie durch Coextrusion
b) Biaxiale Verstreckung der Folie und
c) Thermofixieren der verstreckten Folie.

Die PEN-Schicht kann ein- oder beidseits der PET-Folie angeordnet sein. Bevorzugt ist eine einseitige Anordnung der PEN-Schicht, wobei auf der der PEN-Schicht abgewandten Seite eine weitere Schicht aus PET angeordnet sein kann, die zusätzlich Antiblockmittel enthält.

Die PEN-Schicht weist bevorzugt eine Dicke von 0.1 bis 4 µm, insbesondere 0.2 bis 2 µm auf. Die bevorzugte Dicke der keramischen Schicht aus SiOₓ liegt zwischen etwa 40 und 150 nm.

Bei einer ersten bevorzugten Variante ist x der keramischen Schicht aus SiOₓ eine Zahl zwischen 0.9 und 1.2. Eine derart beschichtete Folie weist eine gegenüber Folien nach dem Stand der Technik um den Faktor 10 verbesserte Sauerstoffbarriere nach einer Sterilisierbehandlung auf, wobei allerdings ein Gelbstich in Kauf genommen werden muss.

Bei einer zweiten bevorzugten Variante ist das x der keramischen Schicht aus SiOₓ eine Zahl zwischen 1.3 und 2, insbesondere zwischen 1.5 und 1.8. Eine derart beschichtete Folie zeigt immer noch ausgezeichnete Barriereeigenschaften nach einer Sterilisierbehandlung und weist insbesondere keine Verfärbungen auf.

Der letztlich für Verpackungszwecke eingesetzte Folienverbund enthält neben der mit SiOₓ beschichteten PEN/PET-Folie je nach Verwendungszweck weitere Folien, beispielsweise Folien aus PET oder aus einem orientierten Polyamid (oPA), oder der Folienverbund kann zur Steuerung der Siegeleigenschaften mit einer Siegelschicht aus beispielsweise Polypropylen (PP) oder Polyethylen (PE) beschichtet sein. Das Zusammenfügen der einzelnen Folien zu einem Folienverbund erfolgt bevorzugt mittels Kaschierklebern auf der Basis von Polyurethan.

Die keramischen Schichten mit SiOₓ können beispielsweise mit Verfahren der Vakuumdünnschicht-Technik, bevorzugt durch Elektronenstrahlverdampfen, auf der PEN/PET-Folie abgeschieden werden, wobei die keramische Schicht in jedem Fall als Grenzschicht auf der mit PEN beschichteten Seite der Folie angeordnet ist und mittels einer weiteren Folie bzw. von einem Kaschierkleber abgedeckt ist.

Mittels eines an sich bekannten Vakuumdünnschichtverfahrens wird durch gleichzeitiges Verdampfen von Siliziumdioxid (SiO₂) und metallischem Silizium im Vakuum eine 10 nm bis 200 nm dicke keramische Schicht aus SiOₓ niedergeschlagen, wobei x eine Zahl zwischen 0.9 und 2 ist. Die mit der keramischen Schicht beschichtete Folie wird sodann mit den weiteren Folien, die auch bedruckt sein können, zum Folienverbund kaschiert.

Bevorzugt erfolgt das Verdampfen von SiO₂ und Si gemeinsam aus einer einzigen Verdampfungsquelle, d.h. aus einer Mischung von SiO₂ und Si.

Zur Herstellung einer keramischen Schicht aus SiOₓ, wobei x eine Zahl zwischen 1.3 und 2 ist, können dem SiO₂ als zu verdampfende Materialien weitere Zusätze wie Al₂O₃, B₂O₃ und MgO in Mengen von bis zu 50 Mol-%, vorzugsweise 5 bis 30 Mol-%, jeweils bezogen auf SiO₂, zugesetzt werden.

Weitere Zusätze, die den zu verdampfenden Materialien zugegeben werden können, sind beispielsweise Al, B und/oder Mg in reiner Form oder als Si-Legierung, in Mengen bis zu 50 Mol-%, vorzugsweise 5 bis 30 Mol-%, jeweils bezogen auf Si.

Das Mengenverhältnis von SiO₂,Al₂O₃, B₂O₃ und MgO zu Si, Al, B und Mg wird beispielsweise so eingestellt, dass sich stöchiometrisch ein Sauerstoffmangel von 10 bis 30%, bezogen auf die Summe der reinen Oxide im abgedampften Material, ergibt.

Das Beschichtungsverfahren wird über die Verdampfungsrate des zu verdampfenden Materials, die Abscheidungsrate auf dem Substrat und die Expositionsdauer des Substrats in der Vakuumkammeratmosphäre derart gesteuert, dass sich die gewünschte Schichtdicke für die SiOₓ-Beschichtung einstellt.

Bei der Herstellung einer keramischen Schicht aus SiOₓ, wobei x eine Zahl zwischen 0.9 und 1.2 ist, kann anstelle einer gleichzeitigen Verdampfung von SiO₂ und Si Siliziummonoxid (SiO) verdampft werden.

Eine Plasma-Vorbehandlung der PEN/PET-Folie vor der SiOₓ-Beschichtung führt zu einer weiteren Verbesserung der Wasserdampf- und Sauerstoffbarriereeigenschaften.

Der erfindungsgemässe Folienverbund eignet sich insbesondere zur Herstellung flexibler Verpackungen wie Folienbeutel sowie als Deckelmaterial zum Aufsiegeln auf Behälter. Ein besonders bevorzugtes Einsatzgebiet liegt in der Verwendung des erfindungsgemässen Folienverbundes zur Verpackung von Nahrungs- und Genussmitteln, die im verpackten Zustand im Wasserbad oder im Wasserdampf bei Temperaturen von mehr als 90°C sterilisiert werden.

Der erfindungsgemässe Folienverbund eignet sich auch als Barrierematerial im technischen und medizinischen Bereich.

Die Überlegenheit des erfindungsgemässen Folienverbundes im Vergleich zu heute üblichen Materialien bezüglich der Barrierewirkung für Sauerstoff und Wasserdampf wird durch die in den Tabellen 1 und 2 zusammengestellten Messergebnisse der genannten Eigenschaften untermauert.

Die untersuchten Folienverbunde setzen sich wie folgt zusammen:
- 1: PET, beschichtet mit SiO/PET/PP
- 2: PET, beschichtet mit SiO_{1.6}/PET/PP
- 3: PET (12 µm)-PEN(1 µm) coextrudiert und beschichtet mit SiO(100 µm)/ PET/PP
- 4: Schichtaufbau wie 3, jedoch beschichtet mit einer keramischen Schicht der Zusammensetzung SiO_{1.6}.

Der Folienverbund Nr. 1 ist eine im Handel erhältliche, als sterilisierfest bezeichnete Verpackungsfolie und dient hier als Vergleichsbeispiel. Der Folienverbund Nr. 2 ist ebenfalls ein Vergleichsbeispiel. Die Folienverbunde Nr. 3 und 4 sind erfindungsgemässe Folienverbunde mit unterschiedlicher Zusammensetzung der keramischen Schicht; diese entspricht im Verbund Nr. 3 der Formel SiO, im Verbund Nr. 4 der Formel SiO_{1.6}.

**Tabelle 1**

| Sauerstoffbarriere bei 25°C und 50% rH in cm³/(m² 24h bar) | | | | |
|---|---|---|---|---|
| **Verbund Nr.** | **Vor Sterilisation** | **Nach Sterilisation bei 121°C/30min** | **Nach Sterilisation bei 130°C/30min** | **Vor Sterilisation nach 50 Gelboflex-Zyklen** ***)** |
| 1 | 0.3 | 0.3 | 7.0 | 1.8 |
| 2 | 0.2 | 7.0 | 15.0 | 1.8 |
| 3 | 0.07 | 0.08 | 0.12 | 0.4 |
| 4 | 0.08 | 0.5 | 0.7 | 0.5 |

| | | | | |
|---|---|---|---|---|
| *) genormter Knittertest, nach ASTM Norm 397-74 | | | | |

**Tabelle 2**

| Wasserdampfbarriere bei 25°C und 100% rH in g/(m² 24 h) | | | | |
|---|---|---|---|---|
| **Verbund Nr.** | **Vor Sterilisation** | **Nach Sterilisation bei 121°C/30min** | **Nach Sterilisation bei 130°C/30min** | **Vor Sterilisation nach 50 Gelboflex-Zyklen** ***)** |
| 1 | 0.3 | 0.3 | 0.8 | 0.3 |
| 2 | 0.2 | 0.8 | 1.2 | 0.3 |
| 3 | 0.1 | 0.1 | 0.1 | 0.1 |
| 4 | 0.1 | 0.2 | 0.3 | 0.1 |

| | | | | |
|---|---|---|---|---|
| *) genormter Knittertest, nach ASTM Norm 397-74 | | | | |

## Patentansprüche

1. Folienverbund für Verpackungszwecke, mit guter Durchtrittssperrwirkung für Wasserdampf und Gase nach Sterilisation im Wasserbad oder im Wasserdampf bei Temperaturen von mehr als 90°C, wobei der Folienverbund eine durch Aufdampfen von anorganischen Materialien erzeugte Sperrschicht mit SiOₓ als wesentlichem Bestandteil aufweist,
dadurch gekennzeichnet, dass
der Folienverbund eine Folie aus Polyethylenterephthalat (PET) mit einer coextrudierten Schicht aus Polyethylen-2,6-naphthalat (PEN) auf mindestens einer Seite umfasst und die Folie auf mindestens einer der mit PEN beschichteten Seiten eine durch gleichzeitiges Verdampfen von Siliziumdioxid (SiO₂) und metallischem Silizium oder durch Verdampfen von Siliziummonoxid (SiO) im Vakuum erzeugte 10 nm bis 200 nm dicke keramische Schicht aus SiOₓ aufweist, wobei x eine Zahl zwischen 0.9 und 2 ist.

2. Folienverbund nach Anspruch 1, dadurch gekennzeichnet, dass die PEN-Schicht eine Dicke von 0.1 bis 4 µm, vorzugsweise 0.2 bis 2 µm aufweist.

3. Folienverbund nach Anspruch 1 oder 2, dadurch gekennzeichnet, dass die keramische Schicht aus SiOₓ eine Dicke von 40 bis 150 nm aufweist.

4. Folienverbund nach einem der Ansprüche 1 bis 3, dadurch gekennzeichnet, dass das x der keramischen Schicht aus SiOₓ eine Zahl zwischen 0.9 und 1.2 ist.

5. Folienverbund nach einem der Ansprüche 1 bis 3, dadurch gekennzeichnet, dass das x der keramischen Schicht aus SiOₓ eine Zahl zwischen 1.3 und 2, bevorzugt zwischen 1.5 und 1.8 ist.

6. Verfahren zur Herstellung eines Folienverbundes für Verpackungszwecke nach einem der Ansprüche 1 bis 5, wobei einzelne Folien zu dem Folienverbund kaschiert werden, dadurch gekennzeichnet, dass auf eine mindestens einseitig mit Polyethylen-2,6-naphthalat (PEN) beschichteten Folie aus Polyethylenterephthalat (PET) auf mindestens einer der mit PEN beschichteten Seiten mittels eines Vakuumdünnschichtverfahrens durch gleichzeitiges Verdampfen von Siliziumdioxid (SiO₂) und metallischem Silizium eine keramische Schicht aus SiOₓ, wobei x eine Zahl zwischen 0.9 und 2 ist, niedergeschlagen und die mit der keramischen Schicht beschichtete Folie nachfolgend mit den weiteren Folien zum Folienverbund kaschiert wird.

7. Verfahren nach Anspruch 6, dadurch gekennzeichnet, dass SiO₂ und Si gemeinsam als Mischung verdampft werden.

8. Verfahren nach Anspruch 6 oder 7 zur Herstellung eines Folienverbundes nach Anspruch 5, dadurch gekennzeichnet, dass den zu verdampfenden Materialien weitere Zusätze, insbesondere Al₂O₃, B₂O₃ und/oder MgO, in Mengen bis zu 50 Mol-%, vorzugsweise 5 bis 30 Mol-%, jeweils bezogen auf SiO₂, zugesetzt werden.

9. Verfahren nach Anspruch 6 oder 7 zur Herstellung eines Folienverbundes nach Anspruch 5, dadurch gekennzeichnet, dass den zu verdampfenden Materialien weitere Zusätze, insbesondere Al, B und/oder Mg in reiner Form oder als Si-Legierung, in Mengen bis zu 50 Mol-%, vorzugsweise 5 bis 30 Mol-%, jeweils bezogen auf Si, zugesetzt werden.

10. Verfahren nach einem der Ansprüche 6 bis 9 zur Herstellung eines Folienverbundes nach Anspruch 5, dadurch gekennzeichnet, dass das Mengenverhältnis von SiO₂ zu Si so eingestellt wird, dass sich stöchiometrisch ein Sauerstoffmangel von 10 bis 30%, bezogen auf das reine Oxid im abgedampften Material, ergibt.

11. Verfahren nach Anspruch 8 und 9, dadurch gekennzeichnet, dass das Mengenverhältnis von SiO₂, Al₂O₃, B₂O₃, und MgO zu Si, Al, B und Mg so eingestellt wird, dass sich stöchiometrisch ein Sauerstoffmangel von 10 bis 30%, bezogen auf die Summe der reinen Oxide im abgedampften Material, ergibt.

12. Verfahren nach einem der Ansprüche 6 bis 12, dadurch gekennzeichnet, dass die mit PEN beschichtete Folie aus PET vor der SiOₓ-Beschichtung einer Plasma-Vorbehandlung unterworfen wird.

13. Verwendung eines Folienverbundes nach einem der Ansprüche 1 bis 5 in der Form von Beuteln und flexiblen Behälterdeckeln als sterilisierbare Verpackung für Nahrungs- und Genussmittel.

14. Verwendung eines Folienverbundes nach einem der Ansprüche 1 bis 5 als Barrierematerial im technischen und medizinischen Bereich.
